Europäisches Patentamt

**European Patent Office**

(11) Veröffentlichungsnummer: **0 170 938**

**Office européen des brevets**

**B1**

(19)

(12) **EUROPÄISCHE PATENTSCHRIFT**

(45) Veröffentlichungstag der Patentschrift:
25.01.89

(51) Int. Cl.⁴: **F 01 D 11/08,** F 01 D 5/08,
F 01 D 11/00, F 02 C 7/28,
F 04 D 29/32

(21) Anmeldenummer: **85108804.7**

(22) Anmeldetag: **13.07.85**

(54) **Schaufel- und Dichtspaltoptimierungseinrichtung für Verdichter von Gasturbinentriebwerken, insbesondere Gasturbinenstrahltriebwerken.**

(30) Priorität: **04.08.84 DE 3428892**

(43) Veröffentlichungstag der Anmeldung:
**12.02.86 Patentblatt 86/7**

(45) Bekanntmachung des Hinweises auf die Patenterteilung:
**25.01.89 Patentblatt 89/4**

(84) Benannte Vertragsstaaten:
**DE FR GB IT**

(56) Entgegenhaltungen:
**EP-A-0 141 770**
**GB-A-2 049 818**
**GB-A-2 054 741**
**GB-A-2 078 859**
**GB-A-2 085 083**
**GB-A-2 137 283**
**GB-A-2 139 292**
**US-A-2 791 091**
**US-A-3 433 020**

**INTERAVIA, Band 38, Nr. 2, Februar 1983, Seite 102
"Pratt & Whitney will mit dem PW4000 den 25-
Tonnen-Markt beherrschen"**

(73) Patentinhaber: **MTU MOTOREN- UND TURBINEN-
UNION MÜNCHEN GMBH, Dachauer Strasse 665
Postfach 50 06 40, D-8000 München 50 (DE)**

(72) Erfinder: **Willkop, Franz, Lipperheidestrasse 1,
D-8000 München 60 (DE)**
Erfinder: **Zähring, Gerhard, Brückenweg 5b, D-8031
Wörthsee (DE)**
Erfinder: **Popp, Joachim, Dipl.- Ing., Adam-
Stegerwald- Strasse 8, D-8060 Dachau (DE)**
Erfinder: **Rütsch, Robert, Theodor- Storm- Strasse
1, D-8047 Karlsfeld (DE)**

EP 0 170 938 B1

## Beschreibung

Rotoren und Gehäuse von Strömungsmaschinen (z. B. Dampfturbinen, Verdichter, Gasturbinen) sind aus Festigkeits- und /oder Gewichtsgründen in der Regel so ausgelegt, daß Gehäusen mit relativ wenig Masse Rotoren mit relativ viel Masse gegenüberstehen. Damit ergeben sich unter anderem folgende Fakten:

- Es kann ein optimales radiales Lauf-/Leitschaufelspiel von z. B. wenigen 1/100 mm nur für einen speziellen Lastfall vorgesehen werden. Andere Lastfälle müssen mit Radialspalten auskommen, die sich aus vorstehender Optimierung, dem Kaltspalt und dem thermischen Übergangsverhalten von Rotor/Stator zwischen zwei Lastfällen ergeben.

- Im Fall zu großer Unterschiede im thermischen Übergangsverhalten kann es notwendig sein, den oben erwähnten "optimalen" Radialspalt größer auszulegen, um in bestimmten Übergangsfällen ein radiales Anstreifen der Lauf-/Leitschaufeln zu vermeiden.

- Die genannten Punkte sind gleichfalls für radiale Dichtungen relevant.

Die Nachteile vorstehender Fakten sind u.a.:

- Leistungs- und Wirkungsgradverlust bzw. Brennstoffmehrverbrauch für Lastfälle, die vom "optimal" ausgelegten abweichen.

- Dito bei Übergangsfällen bzw. instationären Betriebszuständen.

- Anfälligkeit gegen Verdichterpumpen, vornehmlich beim Hochfahren.

Um bezüglich des angesprochenen Problemkreises auf der sicheren Seite liegen zu wollen, ist z. B. gemäß der US-A-4,329,114 bzw. gemäß der GB-A-2054741 eine in Abhängigkeit von Triebwerksleistungsparametern regelbare Radialspaltsteuereinrichtung für Verdichter von Gasturbinentriebwerken vorgesehen, bei der zu Turbinenkühlzwecken stets aus einem verhältnismäßig "kalten" Bereich des Verdichters entnommene Luft im Wege eines am äußeren Verdichtergehäuse befindlichen Klappen-Steuerventils entweder gänzlich oder teilweise außen an der betreffenden inneren Leitschaufeltragstruktur - also über eine Axialerstreckung von der Entnahmestelle bis etwa zur letzten Verdichterstufe hin - entlangströmbar sein soll.

Bei einem anderen, aus der US-A-4,338,061 bzw. der GB-A-2078859 entnehmbaren überwiegend elektronisch (Komputer)/mechanisch (Steuerventil) arbeitenden Radialspalteinstellsystem für Verdichter von Gasturbinentriebwerken soll stets aus einem vergleichsweise weit vorn liegenden Bereich, z. B. aus der 5. Verdichterstufe zu Turbinenkühl- und Sperrluftzwecken abgeblasene verhältnismäßig kalte Luft - vor deren eigentlicher Verwendungsfunktion - zunächst in die Radialspaltregelung einbezogen werden; dabei kommuniziert u.a. die betreffende Abblasestelle sowohl mit einer außen, verdichtergehäuselängsseitig bis zur letzten Verdichterstufe sich erstreckenden ersten Kanalführung und mit einer zur letzteren parallel geführten zweiten Kanalführung, wobei das Steuerventil einen variablen Luftdurchsatz durch beide Kanalführungen, und damit eine hinsichtlich der Intensität variable Kühlung des Außengehäuses erzwingt. Dabei ist die für den jeweiligen Betriebszustand optimale Stellung des Steuerventils zugleich repräsentativ für den jeweils tatsächlich benötigten Radialspaltwert, der über das Komputersystem, unter Beiziehung einschlägiger Triebwerksparameter, aus der Differenz zwischen der tatsächlich (Ist-Wert) und einer für den betreffenden Betriebszustand vorgegebenen GEhäusetemperatur (Soll-Wert) errechnet wird.

Aus den Spaltregel- und Steuersystemen nach den beiden zuvor genannten US-Patentschriften resultieren im wesentlichen folgende Nachteile:

- Aufwendiger elektronischer Bauaufwand,

- konstruktiv aufwendige Luftführungen sowie Steuermittel hierfür (Ventile),

- vergleichsweise hoher Gewichtszuwachs,

- vergleichsweise großer Triebwerksdurchmesser insbesondere im Verdichterbereich,

- Abzapfung vergleichsweise großer Luftmengen aus mühsam verdichteter Luft,

- insgesamt nicht unbeachtlicher Störanfälligkeitsgrad.

Aus der Zeitschrift "INTERAVIA", 2 (Februar) 1983, Seite 102, mittlere Spalte, letzter Absatz, ist es lediglich für sich schon bekannt, eine sogenannte "aktive" Spaltregelung für den Verdichter eines Gasturbinentriebwerks durch Heißlufteinführung in den betreffenden Verdichterrotor erzielen zu wollen.

Gemäß der EP-A-0141 770, die unter Artikel 54(3) fällt, soll mit Rücksicht auf extrem unterschiedliche Flugzustände und Triebwerksbelastungen (Marschflug/Start-Steigflugphase) eine Verdichterrotortemperatursteuerung über unterschiedliche Entnahmestellen des Verdichters erfolgen. Verdichterluft kann entweder am Verdichterende aus einem Axialdiffusorgehäuse entnommen und dann zunächst über einen Außengehäuseringraum einer Außenleitung zugeführt werden. Über ein Steuerventil und eine weitere Leitung kann die Entnahmeluft über Hohlschaufeln und mit diesen gekoppelte Rohre gegen den Rotor geblasen werden. Als Funkton des Triebwerkzustandes (Drehzahlsignal) sowie Flugzustandes (Höhensignal) kann das Steuerventil fallweise so verstellt werden, daß anstelle der heißen Luft verhältnismäßig kalte Luft von der einen, vorderen Entnahmestelle zunächst nach außen und dann über genannte Hohlschaufeln und Rohre ins Rotorinnere geführt wird. Demnach kann hier - bei kompliziertem, störanfälligem Bauaufwand - heiße Entnahmeluft nur auf Umwegen mit großen Temperaturverlusten über die Rohre von einem verhältnismäßig weit vorn liegenden Bereich des Verdichters den letzten Radscheiben zugeführt werden; mit anderen Worten strömt ein Teil der Steuerluft unter verhältnismäßig stark reduziertem gleichen Temperaturniveau von vorn nach hinten gegen sämtliche Rotorpartien ab. Dabei ist es also nicht möglich, mit Rücksicht auf vergleichsweise hohe Temperaturen, die in den letzten Verdichterstufen herrschen, das Temperaturniveau der Radkränze der Rotor- bzw. Tragscheiben dem nabenseitigen Temperaturniveau genau örtlich gezielt anzupassen.

Die Erfindung liegt die Aufgabe zugrunde, eine im Wege einer Heißluftzuführung in den Verdichterrotor arbeitende Schaufel- und Dichtspaltoptimierungseinrichtung für Verdichter von Gasturbinentriebwerken zu schaffen, die bei vergleichsweise geringem Bauaufwand keine nennenswerten Leistungsverluste im Triebwerkskreisprozeß zur Folge hat.

Die gestellte Aufgabe ist durch Patentanspruch 1 erfindungsgemäß gelöst.

Auf diese Weise kann mittels der unvermeidbaren Leckageluftmenge zwischen Verdichterrotor und -stator ein optimales Spaltverhalten auch mit Rücksicht auf instationäre Betriebszustände erreicht werden, indem unter anderem

- die Temperaturen der Laufrad- bzw. Verdichtertragscheiben denen das Verdichtergehäuse annäherbar und
- die Temperaturen dieser Scheiben extrem rasch den Lufttemperaturen eines neuen bzw. veränderten Lastfalles anpaßbar sind.

Dadurch daß ferner,

- die Temperaturgradienten in diesen Scheiben beim Übergang von einem Lastfall auf den anderen reduzierbar und
- die Spannungen in diesen Scheiben in den genannten Übergangslastfällen senkbar sind, kann unter anderem die Lebensdauer der Scheiben erhöht, bzw. können die Scheiben vergleichsweise schlank und leicht dimensioniert werden.

Vorteilhafterweise kann dies alles ohne zusätzlichen regel- und steuertechnischen Aufwand in die Wege geleitet werden. Weitere Ausgestaltungen des Erfindungsgegenstandes nach den Patentansprüchen 2 bis 9 zielen vorrangig auf eine gezielte Heißluftbespülung der mit den jeweils größten Masseninhalten ausgestatteten Verdichterscheibenabschnitte ab, um ein zeitliches thermisches "Hinterherhinken" der betreffenden Scheibenstrukturen gegenüber den betreffenden Außenstrukturbereichen des Verdichters im Interesse jeweils optimaler Schaufel- und Dichtspalte weitestgehend minimieren zu können.

Anhand der Zeichnungen ist die Erfindung beispielsweise weiter erläutert; es zeigen:

Fig. 1 einen die erfindungsgemäße Einrichtung einschließenden Längsschnitt eines Hochdruckaxialverdichters des Gasgenerators eines Strahltriebwerks,

Fig. 2 einen Radialteilschnitt gemäß II - II der Fig. 1,

Fig. 3 eine weitere Variante der erfindungsgemäßen Einrichtung bei einem Hochdruckaxialverdichterrotor eines Strahltriebwerks, ebenfalls als Längsschnitt dargestellt und

Fig. 4 einen Radialschnitt gemäß IV - IV der Fig. 3.

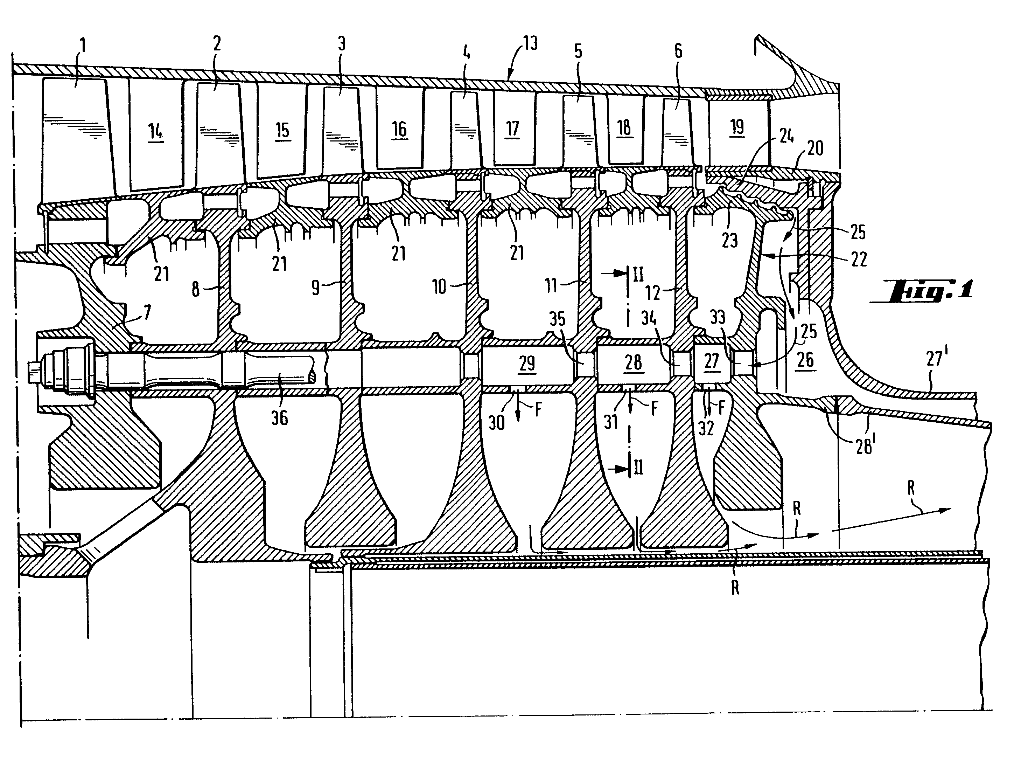

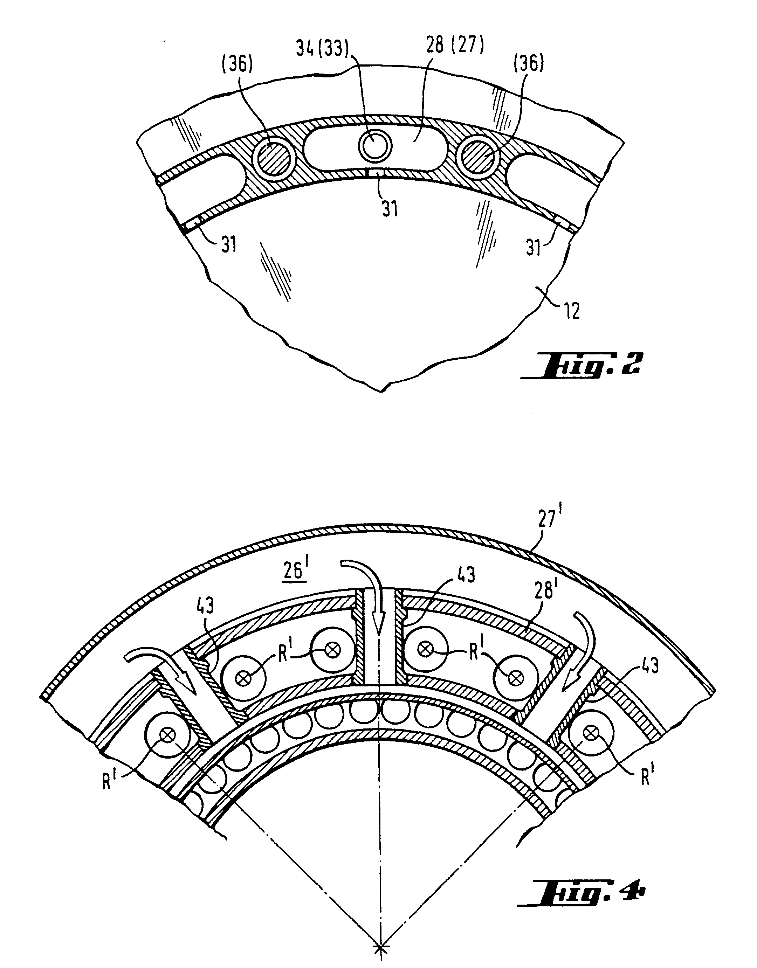

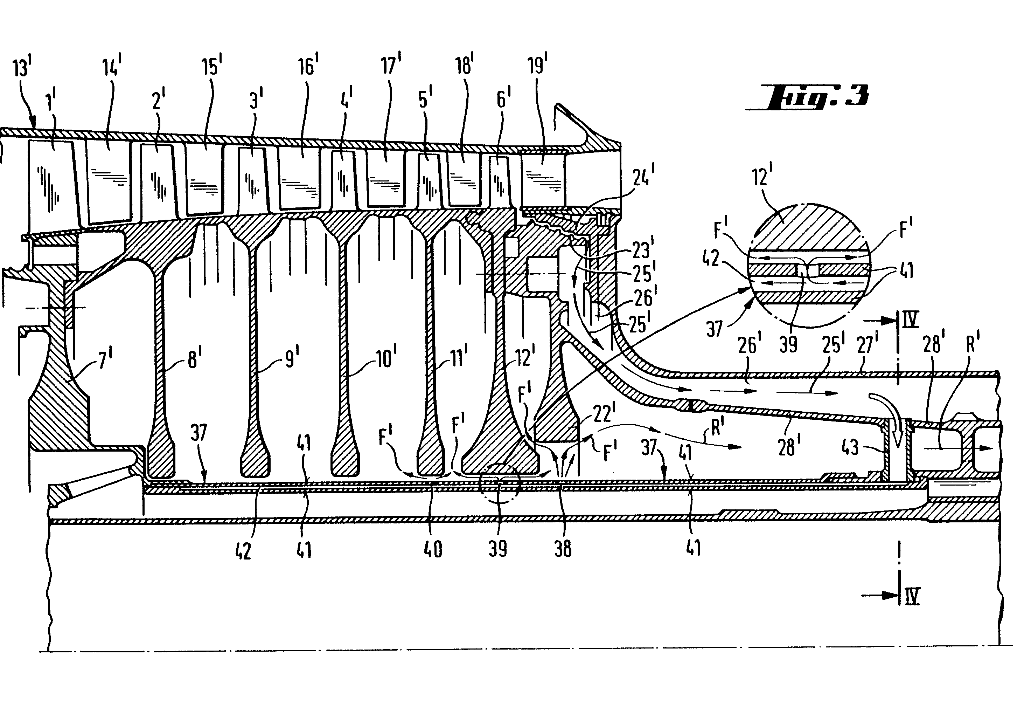

Beim Axialverdichter nach Fig. 1 sind mit Laufschaufeln 1, 2, 3, 4, 5, 6 bestückte Laufradscheiben - der Reihe nach, von links nach rechts - mit 7, 8, 9, 10, 11 und 12 bezeichnet; die am Verdichteraußengehäuse 13 verankerten Leitschaufeln sind - der Reihe nach, von links nach rechts - mit 14, 15, 16, 17, 18 und 19 bezeichnet, wobei die zuletzt genannten Leitschaufeln 19 nicht nur am Außengehäuse 13, sondern auch noch an einem die innere Strömungskanalwand des Verdichters fortsetzenden Statorinnenstrukturbauteil 20 fest verankert sind. Im Bereich der äußeren Verdichterrotorperipherie sind die einzelnen Axialabstände zwischen den Laufradscheiben 7 bis 12 durch Zwischenringe, z. B. 21 - zwischen 7 und 8 - überbrückt, die im übrigen die innere Kanalwand des Verdichters zwischen den einzelnen Laufschaufelfußplatten fortsetzen und an welche die betreffenden Leitschaufeln 14 bis 18 unter Gewährleistung der erforderlichen Radialspalte schaufelendseitig angrenzen. Die letzte Rotorscheibe 22 fungiert als Tragscheibe und ist dabei zugleich als Träger eines labyrinthartigen Dichtungskammes 23 ausgebildet, der mit einer Statorgegendichtungsstruktur 24 korrespondiert. In diese Rotorhauptdichtung 23, 24 fließt zwischen den Laufschaufeln 6 und den Leitschaufeln 19 der letzten Verdichterstufe entnommene, relativ heiße Druckluft ab; nach vollzogenem Dichtungsprozeß der Rotorhauptdichtung strömt die Druckluft als Leckluft in einen Ringkanal 26 ein, der im wesentlichen zwischen der Brennkammeraußengehäusewand 27' bzw. zwischen einer zur letzteren benachbarten Wand und einem Trommelinnenwandabschnitt 28' des Gasgenerators einerseits und der Tragscheibe (22) auf der anderen Seite gebildet ist, und der zugleich Eintrittsabschnitt für die aus dem Ringkanal 26 entnommene, einzelnen Ringkammern 27, 28, 29 sämtlichst zuzuführende Heißluft 25 ist. Dabei wird also die über Rotorhauptdichtung abfließende Leckluft als heiße Entnahmeluft 25 aus dem Ringkanal 26 entnommen und in einer der Hauptströmungsrichtung im Verdichter entgegengesetzter Richtung durch den Rotor geführt.

Gemäß Fig. 1 kann dann also die Entnahmeheißluft - von rechts nach links gesehen - über die in Axialdistanzhalterungen der Scheiben 22, 12, 11 ausgebildeten Ringkammern 27, 28, 29 jeweils zwischen zwei einander benachbarten Scheibensektionen den radial innen liegenden größten Scheibenmassen als Teilströme F zugeführt werden, wozu Heißluftabströmbohrungen 30, 31, 32 in den radial innen liegenden Wandabschnitten der Distanzhalterungen angeordnet sind. Die genannten Teilströme F sind also jeweils fortlaufend gegen die radial innen liegenden größten Scheibenmassen der letzten sowie mindestens einer weiteren darauf folgenden Rotortrag- bzw. Laufradscheibe 22 bzw. 12 gerichtet.

Mittels der Tragscheibe 22 sowie in den Laufradscheiben 12, 11, 10 enthaltener Durchbrüche bzw. Öffnungen 33, 34, 35 ist die aus dem Ringkanal 26 entnommene Heißluft 25 den Ringkammern 27, 28, 29 zuführbar. Dabei kann den Öffnungen 33, 34, 35 und den Ringkammern 27, 28, 29 eine gemeinsame Rotationsmittelebene zugeordnet sein. Die Ringkammern, z. B. 28, Fig. 2, können ferner gleichförmig über dem Umfang verteilt angeordnet sein.

Mit 36 ist in Fig. 1 einer von mehreren Zugankern bezeichnet, mit dem die einzelnen Rotorscheiben axial zusammengespannt sind.

Beim Ausführungsbeispiel nach Fig. 3 und 4 sind mit Fig. 1 relevante oder vergleichbaren Funktionen unterworfene Bauteile fortlaufend mit 1',2',3' usw. bezeichnet.

Gemäß Fig. 3 sind die aus der entnommenen Heißluft 25 (stromab der Rotorhauptdichtung 23',24' entnommen) bereitstellbaren Teilluftströme F' von der zentralen Hohlwelle 37 des Gasgenerators aus unmittelbar gegen die freien Enden der Trag- bzw. Laufradscheiben, z. B. 22' bzw. 12', 11', gerichtet, in das Verdichtertrommelinnere einspeisbar, und zwar so, daß dabei die die jeweils größten Scheibenmasseninhalte einschließenden Scheibenpartien von den Teilluftströmen F' gezielt erfaßt werden. Dabei sind die betreffenden Trag- bzw. Laufradscheibenenden über die jeweils äußeren Belochungen 38, 39, 40 eines in die zentrale Hohlwelle 37 des Rotors integrierten Doppelrohrs 41 mit der aus dem Verdichter entnommenen Heißluft bespülbar, welche über einen vom Doppelrohr 41 eingeschlossenen Ringraum 42 zugeführt wird, der von Entnahmeheißluft 25' entgegen der Hauptströmung im Verdichter durchströmt und an den Ringkanal 26' angeschlossen ist.

Dieser Ringraum 42 des Doppelrohrs 41 ist mittels gegenüber dem Innenraum des trommelartigen Rotors abgeschirmter Rohrführungen 43 (s.h. auch Fig. 4) mit dem radial/axial auskragenden Ringkanal 26' verbunden, der im wesentlichen zwischen der Brennkammeraußengehäusewand 27' oder einer gegenüber der letzteren benachbarten Wand einerseits und einem oder mehreren Trommelinnenwandabschnitten 28 einer Tragscheibe 22' des Rotors ausgebildet ist und in welchen die aus der Leckluft gewonnene Entnahmeheißluft 25' eingespeist wird.

Nach vollzogener Erwärmung und thermischer Steuerung der Trag- bzw. Radscheiben 22',12', 11' kann die entnommene Heißluft (Pfeile R') in besonders vorteilhafter Weise z. B. zu Turbinenkühlzwecken zugeführt werden, da sie infolge des vorausgegangenen Wärmeentzugs eine gegenüber der ursprünglichen Verdichterendtemperatur wesentlich niedrigere Temperatur aufweist. Gleiches gilt sinngemäß für die Konfiguration gemäß Fig. 1 (Pfeile R).

Der Erfindungsgegenstand ist auch z. B. bei Gasturbinentriebwerken mit kombinierten Axial-Radialverdichtern vorteilhaft einsetzbar.

**Patentansprüche**

1. Schaufel- und Dichtspaltoptimierungseinrichtung für einen Verdichter eines Gasturbinentriebwerks, insbesondere eines Gasturbinenstrahltriebwerks, bei der Radscheiben (10, 11, 12) des Verdichters mit aus diesem entnommener Heißluft beaufschlagt und thermisch gesteuert sind, mit einer am Verdichterende angeordneten Rotorhauptdichtung (23, 24), die aus dem Verdichterkanal -stromab der Laufschaufeln (6) der letzten Verdichterstufe (6, 13)- mit Druckluft versorgt wird, wobei die Rotorhauptdichtung (23, 24) austrittsseitig mit einem zwischen Rotor (Teil 22) und Stator (Teil 27') ausgebildeten Ringkanal (26) in Verbindung steht, aus dem die über die Dichtung abfließende Leckluft, als Heißluft entnommen und in einer der Hauptströmungsrichtung im Verdichter entgegengesetzten Richtung durch den Rotor geführt und dabei in Teilströme (F) aufgespalten wird, die jeweils fortlaufend gegen die radial innen liegenden größten Scheibenmassen der letzten sowie mindestens einer weiteren darauf folgenden Rotortrag- bzw. Laufradscheibe (22 bzw. 12) gerichtet sind.

2. Einrichtung nach Anspruch 1, dadurch gekennzeichnet, daß die betreffenden freien Trag- bzw. Laufradscheibenenden über die jeweils äußeren Belochungen (38, 39, 40) eines in eine zentrale Hohlwelle (37) des Rotors integrierten Doppelrohrs (41) mit aus der Heißluft bereitgestellten Teilströmen (F') bespülbar sind, welche einen vom Doppelrohr (41) eingeschlossenen Ringraum (42) entgegen der Hauptströmung im Verdichter durchströmt und an den Ringkanal (26') angeschlossen ist.

3. Einrichtung nach Anspruch 2, dadurch gekennzeichnet, daß der Ringraum (42) des Doppelrohrs (41) mittels gegenüber dem Innenraum des trommelartigen Rotors abgeschirmter Rohrführungen (43) mit dem radial/axial auskragenden Ringkanal (26') in Verbindung steht, der im wesentlichen zwischen einer Brennkammeraußengehäusewand (27') oder einer gegenüber der letzteren benachbarten Wand einerseits und einem oder mehreren Trommelinnenwandabschnitten (28') einer Tragscheibe (22') des Rotors ausgebildet ist.

4. Einrichtung nach Anspruch 1, dadurch gekennzeichnet, daß die aus dem Ringkanal (26) entnommene Heißluft über in Axialdistanzhalterungen der Scheiben (z. B. 22, 12, 11, 10) integrierte Ringkammern (27, 28, 29) entgegengerichtet zur Hauptströmungsrichtung im Verdichter geführt ist, wobei die Ringkammern (27, 28, 29) an radial innen liegenden Wandabschnitten Abströmbohrungen (30, 31, 32) für die Teilströme (F) aufweisen, die zwischen benachbarten Scheibensektionen gegen die radial inneren größten Scheibenmassen abströmen.

5. Einrichtung nach Anspruch 4, dadurch gekennzeichnet, daß die aus dem Ringkanal (26) entnommene Heißluft über in einer Tragscheibe (22) bzw. in den Laufradscheiben (12, 11) enthaltene Durchbrüche bzw. Öffnungen (33 bzw. 34, 35) den Ringkammern (27 bzw. 28, 29) zugeführt wird.

6. Einrichtung nach einem oder mehreren der Ansprüche 1, 4 und 5, dadurch gekennzeichnet, daß der Ringkanal (26) im wesentlichen zwischen der Brennkammeraußengehäusewand (27') bzw. zwischen einer zur letzteren benachbarten Wand einerseits und dem rückwärtigen Abschnitt einer Tragscheibe (22) nebst einem zugehörigen Trommelinnenwandabschnitt (28') des Rotors andererseits ausgebildet ist, wobei der rückwärtige Abschnitt der Tragscheibe (22) zugleich Eintrittsabschnitt für die aus dem Ringkanal (26) den Ringkammern (27, 28, 29) sämtlichst zuzuführende Heißluft ist.

7. Einrichtung nach einem oder mehreren der Ansprüche 1 bis 6, dadurch gekennzeichnet, daß die im Sinne der Hauptströmungsrichtung durch den Verdichter letzte Rotorscheibe eine Tragscheibe (22; 22') für den rotierenden Teil (23; 23') der in der Art einer Labyrinthdichtung ausgebildeten Rotorhauptdichtung (23, 24 bzw. 23', 24') ist.

8. Einrichtung nach einem oder mehreren der Ansprüche 1 bis 7, dadurch gekennzeichnet, daß der Verdichter als kombinierter Axial-Radialverdichter ausgebildet ist.

9. Einrichtung nach einem oder mehreren der Ansprüche 1 bis 8, dadurch gekennzeichnet, daß die Heißluft nach vollzogener thermischer Steuerung der Radscheiben mindestens einem anderweitigen Verbraucher des Triebwerks, z. B. als Kühlluft, zugeführt wird.

**Revendications**

1. Dispositif d'optimisation de l'interstice d'étanchéité et de l'interstice entre les ailettes pour un compresseur d'un propulseur à turbine à gaz, notamment d'un moteur à réaction à turbine à gaz, dispositif dans lequel les disques de roues (10, 11, 12) du compresseur sont alimentés et commandés thermiquement avec un air chaud prélevé à partir de ce compresseur, avec un joint d'étanchéité principal du rotor (23, 24) disposé à l'extrémité du compresseur, et qui est alimenté en air comprimé, à partir du canal du compresseur, en aval des aubes mobiles (6) du dernier étage (6, 13) du compresseur, en ce que le joint d'étanchéité principal (23, 24) du rotor, est en communication, côté sortie, avec un canal annulaire (26), ménagé entre le rotor (partie 22) et le stator (partie 27'), canal à partir duquel l'air de fuite s'écoulant par l'intermédiaire du joint d'étanchéité, est prélevé en tant qu'air chaud et est canalisé à travers le rotor, dans un sens opposé au sens de l'écoulement principal dans le compresseur, et est alors scindé en écoulements partiels (F), qui sont respectivement dirigés successivement contre les masses les plus grandes se situant radialement vers l'intérieur, du dernier disque porteur du rotor ou bien du dernier disque de roue mobile (22 ou bien 12) ainsi qu'au moins d'un autre disque suivant.

2. Dispositif selon la revendication 1, caractérisé en ce que les extrémités libres correspondantes des disques porteurs ou bien des disques de roues mobiles, sont susceptibles d'être baignées par les écoulements partiels (F') rendus disponibles à partir de l'air chaud, par l'intermédiaire des orifices extérieurs respectifs (38, 39, 40) d'un tube double (41) intégré dans un arbre creux central (37) du rotor, cet air chaud parcourant dans le sens opposé au sens d'écoulement principal dans le compresseur, un espace annulaire (42) inclus dans le tube double (41) et qui est raccordé au canal annulaire (26').

3. Dispositif selon la revendication 2, caractérisé en ce que l'espace annulaire (42) du tube double (41) est en communication, par des passages tubulaires (43) protégés vis à vis de l'espace interne du rotor en forme de tambour, avec le canal annulaire (26') s'étendant radialement et axialement, et qui est essentiellement ménagé, d'une part, entre une paroi (27') du carter externe de la chambre de combustion, ou bien une paroi voisine de celle-ci, et, d'autre part, une ou plusieurs parties (28') de la paroi interne du tambour d'un disque porteur (22') du rotor.

4. Dispositif selon la revendication 1, caractérisé en ce que l'air chaud extrait du canal annulaire (26) est canalisé dans le compresseur dans le sens opposé au sens de l'écoulement principal, par l'intermédiaire de chambres annulaires (27, 28, 29) intégrées dans les entretoises axiales des disques (par exemple 22, 12, 11, 10), ces chambres annulaires (27, 28, 29) comportant sur leurs parties de parois se situant radialement vers l'intérieur, des perçages d'écoulement (30, 31, 32) pour les écoulements partiels (F), qui s'écoulent entre deux sections de disques voisines contre les masses les plus grandes situées radialement vers l'intérieur, des disques.

5. Dispositif selon la revendication 4, caractérisé en ce que l'air chaud extrait du canal annulaire (26) est amené aux chambres annulaire (27 ou bien 28, 29) par l'intermédiaire d'ajours ou bien d'orifices (33 ou bien 34, 35) ménagés dans un disque porteur (22) ou bien dans les disques de roues mobiles (12, 11).

6. Dispositif selon une ou plusieurs des revendications 1, 4 et 5, caractérisé en ce que le canal annulaire (26) est essentiellement ménagé d'une part, entre la paroi (27) du boîtier externe de la chambre de combustion ou bien entre une paroi voisine de celle-ci, et, d'autre part, la partie arrière d'un disque porteur (22) et une partie associée (28') de la paroi interne d'un tambour du rotor, la partie arrière du disque porteur (22) constituant en même temps la partie d'entrée pour l'air chaud extrait du canal annulaire (26) et devant être amené globalement aux chambres annulaires (27, 28, 29).

7. Dispositif selon une ou plusieurs des revendications 1 à 6, caractérisé en ce que le dernier disque du rotor, selon le sens de l'écoulement principal à travers le compresseur, est un disque porteur (22, 22') pour la partie tournante (23, 23') d'un joint d'étanchéité principal (23, 24; ou bien 23', 24') du rotor, réalisé à la façon d'un joint à labyrinthe.

8. Dispositif selon une ou plusieurs des revendications 1 à 7, caractérisé en ce que le compresseur est réalisé sous la forme d'un compresseur axial et radial combinés.

9. Dispositif selon une ou plusieurs des revendications 1 à 8, caractérisé en ce que l'air chaud, après la commande thermique des disques de roues, est amené au moins à un autre dispositif utilisateur du propulseur, par exemple pour jouer le rôle d'air de refroidissement.

**Claims**

1. Blade and sealing gap optimising device for a compressor of a gas turbine propulsion unit, particularly of a gas turbine jet propulsion unit, wherein wheel discs (10, 11, 12) of the compressor are exposed to hot air drawn from the latter and are thermally controlled and with, disposed at the compressor end, a main rotor seal (23, 24) supplied with compressed air from the compressor duct - downstream of the rotor blades (6) of the final compressor stage (6, 13), the main rotor seal (23, 24) being on the outlet side connected to an annular passage (26) constructed between rotor (part 22) and stator (part 27') and from which the leakage air flowing out through the seal is drawn off as hot air and is passed through the rotor in a direction opposite to the main direction of flow through the compressor, being split thereby into partial flows (F) directed continuously against the radially inwardly greatest disc masses of the final and of at least one further subsequent rotor bearer disc or rotor disc (22 or 12).

2. Device according to claim 1, characterised in that the relevant free bearer or rotor disc ends can be flushed by partial flows (F') prepared from the hot air and through whichever are the outer perforations (38, 39, 40) in a twin pipe (41) integrated into a central hollow shaft (37) in the rotor, the said hot air flowing through the annular space (42) enclosing by the double pipe (41) against the main flow in the compressor, and being connected to the annular duct (26').

3. Device according to claim 2, characterised in that the annular space (42) in the double pipe (41) communicates with the radially/axially protruding annular duct (27') via tubular guides (43) which are screened in respect of the interior of the drum-like rotor, the said annular duct being substantially constructed between an outer wall (27') of the combustion chamber housing or a wall adjacent the latter, on the one hand, and one or a plurality of inner drum wall portions (28') of a bearer disc (22') of the rotor.

4. Device according to claim 1, characterised in that the hot air drawn from the annular duct (26) is passed through annular chambers (27, 28, 29) integrated into axial spacers between the discs (e.g. 22, 12, 11, 10) in the direction opposite to that of the main flow in the compressor, the annular chambers (27, 28, 29) having on radially interior wall portions discharge ports (30, 31, 32) for the partial flows (F) which flow out between adjacent disc sections and against the radially inwardly greatest disc masses.

5. Device according to claim 4, characterised in that the hot air taken from the annular duct (26) is fed to the annular chambers (27 or 28, 29) via ports or apertures (33 or 34, 35) contained in a bearer disc (22) or in the rotor discs (12, 11).

6. Device according to one or more of claims 1, 4 and 5, characterised in that the annular duct (26) is substantially constructed between the outer wall (27') of the combustion chamber housing or between a wall adjacent the latter on the one hand and the rear portion of a bearer disc (22) together with the associated inner drum wall portion (28') of the rotor on the other, the rear portion of the bearer disc (22) being at the same time the inlet portion for all the hot air which is to be fed to the annular chambers (27, 28, 29) from the annular duct (26).

7. Device according to one or more of claims 1 to 6, characterised in that the last rotor disc in the direction of the main direction of flow through the compressor is a bearer disc (22, 22') for the rotating part (23, 23') of the main rotor seal (23, 24 or 23', 24') which is constructed like a labyrinthine seal.

8. Device according to one or more of claims 1 to 7, characterised in that the compressor is constructed as a combined axial- radial compressor.

9. Device according to one or more of claims 1 to 8, characterised in that once thermal control of the wheel discs is completed, the hot air is fed to at least one other consumer in the propulsion unit, e.g. as cooling air.

Fig. 1

**Fig. 2**

**Fig. 4**

**Fig.3**